# EUROPÄISCHE PATENTSCHRIFT

(11) **EP 2 496 403 B1**
(45) Veröffentlichungstag und Bekanntmachung des Hinweises auf die Patenterteilung: **02.10.2013**
(21) Anmeldenummer: 10781423.8
(22) Anmeldetag: 04.11.2010
(51) Int. Cl.: B29C 67/00, B29C 41/12

(54) **VORRICHTUNG UND VERFAHREN ZUR HERSTELLUNG EINES DREIDIMENSIONALEN KÖRPERS**
DEVICE AND METHOD FOR PRODUCING A THREE-DIMENSIONAL BODY
DISPOSITIF ET PROCÉDÉ DE RÉALISATION D'UN CORPS TRIDIMENSIONNEL

(30) Priorität: 08.11.2009 DE 102009053190
(43) Veröffentlichungstag der Anmeldung: 12.09.2012
(73) Patentinhaber: FIT Fruth Innovative Technologien GmbH, 92331 Parsberg (DE)
(72) Erfinder: FRUTH, Carl, 92331 Parsberg (DE)
(74) Vertreter: Schneider, Andreas
(86) Internationale Anmeldenummer: PCT/EP2010/006706
(87) Internationale Veröffentlichungsnummer: WO 2011/054505

(56) Entgegenhaltungen:
- WO-A1-03/086726
- WO-A2-2008/028443
- DE-A1-102008 022 946

## Beschreibung

Die Erfindung betrifft eine Vorrichtung und ein Verfahren zur Herstellung eines dreidimensionalen Körpers durch selektives Verfestigen eines schichtweise aufgebrachten Aufbaumaterials.

Insbesondere betrifft die Erfindung ein Verfahren zur Herstellung eines dreidimensionalen Körpers durch selektives Verfestigen eines schichtweise aufgebrachten Aufbaumaterials, bei dem Aufbaumaterial mit Hilfe einer Aufbringeinrichtung auf eine Unterlage oder eine bereits verfestigte Schicht des herzustellenden Körpers aufgebracht wird, wobei die Aufbringeinrichtung einen beweglich gelagerten Vorratsbehälter zur Aufnahme von Aufbaumaterial umfaßt, der zum Aufbringen einer Schicht von einer Warteposition eine Aufbringposition und vor dem Verfestigen der Schicht von der Aufbringposition zurück in die Warteposition überführt wird, und wobei der Vorratsbehälter ein gegenüber Behälterwänden beweglich, insbesondere verschiebbar gelagertes, sich in der Aufbringposition im wesentlichen parallel zu der zu erzeugenden Schicht erstreckendes Trennelement aufweist, durch dessen Verfahren ein Teil des in der Aufbringposition angeordneten Vorratsbehälters zunächst zum Aufbringen von Aufbaumaterial geöffnet wird.

Insbesondere betrifft die Erfindung weiterhin eine Vorrichtung zur Herstellung eines dreidimensionalen Körpers durch selektives Verfestigen eines schichtweise aufgebrachten Aufbaumaterials, mit einer Aufbringeinrichtung, mit deren Hilfe Aufbaumaterial auf eine Unterlage oder eine bereits verfestigte Schicht des herzustellenden Körpers aufgebracht wird, wobei die Aufbringeinrichtung einen beweglich gelagerten Vorratsbehälter zur Aufnahme von Aufbaumaterial umfaßt, der zum Aufbringen einer Schicht von einer Warteposition eine Aufbringposition und vor dem Verfestigen der Schicht von der Aufbringposition zurück in die Warteposition überführbar ist, und wobei der Vorratsbehälter ein gegenüber Behälterwänden beweglich, insbesondere verschiebbar gelagertes, sich in der Aufbringposition im wesentlichen parallel zu der zu erzeugenden Schicht erstreckendes Trennelement aufweist, durch dessen Verfahren ein Teil des in der Aufbringposition angeordneten Vorratsbehälters zunächst zum Aufbringen von Aufbaumaterial geöffnet wird.

Eine solche Vorrichtung bzw. ein solches Verfahren ist aus dem Patentdokument W02008/028443 A2 bekannt.

Verfahren zur Herstellung von dreidimensionalen Körpern durch selektives Verfestigen eines Aufbaumaterials sind in großer Zahl aus dem Stand der Technik bekannt. Zu nennen sind hier beispielsweise das Laser-Sintern oder das Selektive Masken-Sintern. Bei diesen Verfahren werden mit Hilfe einer additiven Fertigungsmethode dreidimensionale Objekte direkt aus CAD-Daten hergestellt. Dabei erfolgt der Aufbau des Körpers schichtweise, indem Schichten eines Aufbaumaterials sukzessiv übereinander aufgetragen werden. Vor dem Auftragen der jeweiligen nächsten Schichten werden die dem zu fertigenden Objekt entsprechenden Stellen in den jeweiligen Schichten selektiv verfestigt. Das Verfestigen erfolgt durch lokales Erhitzen des zumeist pulverförmigen Schichtrohmaterials mit Hilfe einer Strahlungsquelle. Indem gezielt Strahlung in geeigneter Weise in den gewünschten Bereich eingebracht wird, kann dabei eine exakt definierte, beliebig geartete Objektstruktur erzeugt werden. Solche Verfahren sind insbesondere zu Herstellung von dreidimensionalen Körpern anwendbar, indem mehrere dünne, individuell gestaltete Schichten aufeinander folgend erzeugt werden.

Materialien, die in derartigen Schichtbauverfahren zum Einsatz kommen, sind beispielsweise Harze, Kunststoffe, Metalle oder Keramiken. Anlagen, mit denen ein solches Schichtbauverfahren durchgeführt wird, werden auch als Schichtbauanlagen oder Rapid Prototyping-Systeme bezeichnet.

Bei einem neuartigen Schichtbauverfahren, wie es in der deutschen Patentanmeldung DE 10 2008 022 946 beschrieben ist, wird vorgeschlagen, das Aufbaumaterial nicht wie zuvor allgemein üblich durch eine horizontale Bewegung eines Aufbringelements (Rakel, Klinge, Walze etc.) aufzutragen. Statt dessen wird zur Verwirklichung eines "kontaktlosen" Materialauftrags der Einsatz eines Vorratsbehälters zur Aufnahme von Aufbaumaterial vorgeschlagen, aus welchem heraus Aufbaumaterial in einer ersten Schichtdicke auf eine Unterlage oder eine bereits verfestigte Schicht des herzustellenden Körpers aufgebracht wird. Anschließend wird ein Teil des aufgebrachten, noch nicht verfestigten Aufbaumaterials wieder entfernt, so daß eine definierte Schicht aus unverfestigtem Aufbaumaterial verbleibt, die zumindest in vorbestimmten Bereichen eine zweite Schichtdicke aufweist, die geringer ist als die ursprünglich aufgebrachte erste Schichtdicke. Das Aufbaumaterial wird also zunächst "dick" aufgetragen und anschließend zur Erzeugung der gewünschten Schichtdicke wieder abgetragen, wobei das Abtragen in einer Art und Weise erfolgt, daß Scher- oder Schubkräfte, die auf die verbleibende Schicht aus noch unverfestigtem Aufbaumaterial einwirken könnten, vermieden oder aber jedenfalls stark verringert werden. Zu diesem Zweck wird ein Trennelement verwendet, welches eine parallel zu der Oberfläche der zu erstellenden Schicht verlaufenden Trennkante aufweist, wobei das Trennelement horizontal in dem Aufbaumaterial bewegt wird, um den nicht benötigten Teil des aufgebrachten Materials wieder zu entfernen. Zusammenfassend betrifft die dort beschriebene Technologie also ein querkraftfreies Auftragen von Aufbaumaterial durch den Einsatz einer "losen Schüttung" anstelle eines Rakelauftrages oder dergleichen. Wegen der Hin- und Her-Bewegung des Vorratsbehälters wird diese Technik auch als "Powder Shuttle"-Technologie bezeichnet.

Der Vorratsbehälter, aus dem heraus das Aufbaumaterial aufgetragen wird, muß zum Verfestigen der zu erzeugenden Schicht von seiner Aufbringposition in eine Warteposition überführt werden. Durch das Entfernen des Vorratsbehälters aus der Aufbringposition wird die zu verfestigende Schicht freigegeben. Mit anderen Worten wird Platz geschaffen für die von einer Strahlungsquelle stammende Strahlung, die in die zu verfestigende Schicht eingebracht wird.

Durch das horizontale Entfernen des Vorratsbehälters aus seiner Aufbringposition in die Warteposition entstehen jedoch Verwirbelungen der Gasmoleküle an der Oberfläche der zu verfestigenden Schicht. Durch den entstehenden Sog kommt es zur Bildung von feinsten Oberflächenstörungen, insbesondere von sogenannten "ripples". Diese Störungen treten insbesondere dann auf, wenn als Aufbaumaterial feine oder feinste Pulver verwendet werden. Dies ist insbesondere deshalb nachteilig, weil der Vorratsbehälter zur Vermeidung derartiger Störungen besonders langsam bewegt werden muß, wodurch sich lange Produktionszeiten für die einzelnen Schichten ergeben.

Eine Aufgabe der vorliegenden Erfindung ist es daher, die Technologie zur Herstellung von dreidimensionalen Körpern durch selektives Verfestigen derart zu verbessern, daß bei der Verwendung der "Powder Shuttle"-Technologie keine Oberflächenstörungen an der zu erzeugenden Schicht auftreten oder derartige Störungen zumindest deutlich verringert werden. Insbesondere ist es eine Aufgabe der Erfindung, die Prozeßzeiten und insbesondere die Beschichtungszeiten bei der "Powder Shuttle"-Technologie deutlich zu verringern.

Diese Aufgabe wird durch die in den Patentansprüchen angegebenen Vorrichtungen bzw. Verfahren gelöst. Vorteilhafte Ausführungen der Erfindung sind in den Unteransprüchen angegeben. Die im Folgenden im Zusammenhang mit den erfindungsgemäßen Verfahren erläuterten Vorteile und Ausgestaltungen gelten sinngemäß auch für die erfindungsgemäßen Vorrichtungen und umgekehrt.

Ein erstes erfindungsgemäßes Verfahren unterscheidet sich von dem bekannten Verfahren nicht nur dadurch, daß der geöffnete Teil des in der Aufbringposition angeordneten Vorratsbehälters durch ein Verfahren des Trennelements anschließend zum Herstellen der zu verfestigenden Schicht durch teilweises Entfernen des aufgebrachten, noch nicht verfestigten Aufbaumaterials wieder geschlossen wird.

Das erste erfindungsgemäße Verfahren zeichnet sich insbesondere dadurch aus, daß das Überführen des Vorratsbehälters von der Aufbringposition in die Warteposition ein Abheben des Vorratsbehälters von der zu verfestigenden Schicht umfaßt und/oder daß das Überführen des Vorratsbehälters von der Warteposition in die Aufbringposition ein Absenken des Vorratsbehälters umfaßt. Diese Erfindungsidee beruht auf der Erkenntnis, daß ein Verfahren des Vorratsbehälters relativ zu einer zu verfestigenden Schicht (oder umgekehrt) in ausschließlich horizontaler Richtung, wie es in der DE 10 2008 022 946 beschrieben ist, zu einer Luftströmung über der Oberfläche und damit verbunden zu Verwirbelungen oberhalb der zu verfestigenden Schicht führt, die für das Entstehen von Oberflächenstörungen, insbesondere sogenannten "ripples" verantwortlich sind. Wird der Vorratsbehälter hingegen während des Überführens in die Warteposition, insbesondere vor einem horizontalen Verfahren des Vorratsbehälters, angehoben, so verringern sich die Verwirbelungen an der Oberfläche der Schicht.

Der beschriebene Effekt kann entsprechend erreicht werden, wenn anstelle eines Anhebens des Vorratsbehälters ein Absenken der zu verfestigenden Schicht erfolgt. Wesentlich ist das Herstellen eines Luftraumes zwischen Vorratsbehälter und Schicht während, insbesondere aber vor dem zumeist horizontalen Wegbewegen des Vorratsbehälters von der Schicht in die Warteposition.

Besonders vorteilhaft ist es, wenn der Vorratsbehälter ungleichmäßig angehoben bzw. abgesenkt, so daß er gegenüber der zu erzeugenden Schicht gekippt ist, der Vorratsbehälter also schräg steht, wenn er von der zu erzeugenden Schicht wegbewegt oder aber auf die Schicht zu bewegt wird. Es kommt mit anderen Worten also darauf an, den Abstand zwischen dem Vorratsbehälter einerseits und der Schicht andererseits ungleichmäßig zu verändern. In diesem Fall verringern sich die auch bei einem parallelen Abheben aufgrund der Sogwirkung noch vorhandenen Verwirbelungen an der Schichtoberfläche nochmals deutlich. Dies ist darauf zurückzuführen, daß durch das Kippen bzw. Herstellen eines ungleichmäßigen Abstandes vergleichsweise schnell eine relativ große Öffnung zwischen der Unterseite des Vorratsbehälters einerseits und der Schicht andererseits entsteht, so daß die Strömungsgeschwindigkeit der Gasmoleküle in dem Zwischenraum zwischen der Unterseite des Vorratsbehälters einerseits und der Schicht andererseits und insbesondere unmittelbar oberhalb der zu erzeugenden Schicht vergleichsweise gering ist, während bei einem horizontalen Verfahren eines ungekippten Vorratsbehälters in dem vergleichsweise kleinen Zwischenraum zwischen der Unterseite des Vorratsbehälters einerseits und der Schicht andererseits hohe Strömungsgeschwindigkeiten auftreten, sofern ein solcher Zwischenraum überhaupt vorhanden ist.

Das Abkippen des Vorratsbehälters stellt eine besonders unkomplizierte Lösung zur schnellen Schaffung eines Luftraumes zwischen Vorratsbehälter und Schicht dar. Gegenüber einem parallelen Abheben des Vorratsbehälters wird der Luftraum deutlich schneller erzeugt werden. Im Ergebnis ermöglicht dies ein besonders schnelles, insbesondere horizontales Verfahren des Vorratsbehälters.

Nach der erfolgten Verfestigung der Schicht wird zum Aufbringen einer neuen Schicht der Vorratsbehälter wieder in die Aufbringposition verbracht. Hierbei gilt das oben beschriebene entsprechend. Vorzugsweise wird der Vorratsbehälter in Schrägstellung an seine Zielposition an der zu erzeugenden Schicht, die Aufbringposition, verbracht und anschließend in eine im wesentlichen horizontale Stellung zurückgekippt. Auch hierbei verringert die vergleichsweise große Öffnung zwischen der Unterseite des Vorratsbehälters einerseits und der Schicht andererseits die Bildung von Verwirbelungen und Oberflächenschäden. Nach dem Geradestellen des Vorratsbehälters und dem Entfernen des Bodenelements erfolgt wiederum der Auftrag des Pulvers in loser Schüttung und das Entfernen des überschüssigen Aufbaumaterials durch das Trennelement.

Basierend auf der oben genannten Erkenntnis ist es also ein erster Grundgedanke der Erfindung, die Gasbewegungen, welche durch ein Verfahren des Vorratsbehälters verursacht werden und besonders bei feinen und feinsten Pulvern zu Verwirbelungen an der Oberfläche der zu erzeugenden Schicht führen können, dadurch zu verringern, daß die Geschwindigkeit des strömenden Gases zwischen der Unterseite des Vorratsbehälters einerseits und der Schicht andererseits und insbesondere an der Oberfläche der Schicht minimiert wird. Durch die vorgeschlagenen Maßnahmen werden Verfahrgeschwindigkeiten des Vorratsbehälters von über 500 mm/s bis 2000 mm/s möglich, so daß die Beschichtungszeiten bei der "Powder Shuttle"-Technologie deutlich verringert werden können.

Nachfolgend wird eine zweite Erfindungsidee beschrieben.

Basierend auf der oben genannten Erkenntnis ist es ein weiterer Grundgedanke der Erfindung, mit dem Ziel der Verringerung der Beschichtungszeiten die Gasbewegung dadurch zu verringern, daß die strömende Gasmenge reduziert wird. Hierzu wird erfindungsgemäß vorgeschlagen, das Verfahren in einer Vakuumumgebung durchzuführen.

Ein weiteres erfindungsgemäßes Verfahren zeichnet sich daher dadurch aus, daß die Bewegung des Vorratsbehälters von der Aufbringposition in die Warteposition und/oder von der Warteposition in die Aufbringposition und/oder das Verfahren des Trennelements zum Öffnen und/oder Schließen des Vorratsbehälters eine sich an der Oberfläche der zu verfestigenden Schicht bzw. der bereits verfestigten Schicht entlangbewegende Gasströmung hervorruft und daß das Verfahren unter Vakuum abläuft, um die an der Oberfläche der zu verfestigenden Schicht bzw. der bereits verfestigten Schicht entlangströmende Gasmenge zu reduzieren, mit dem Ziel, Gasbewegungen, die zu Verwirbelungen an der Schichtoberfläche und damit zu Oberflächenstörungen führen können, zu verringern.

Zwar ist die Verwendung von Vakuum bei Schichtbauverfahren grundsätzlich bereits bekannt. Bisher wird Vakuum jedoch nur als Alternative zum Einsatz von Schutzgas verwendet, mit dem der Prozeßraum kontinuierlich gespült wird, insbesondere um Oxidationsprozesse zu unterdrücken, die während des Sinterns bei Vorhandensein von Außenluft ablaufen. Mit der vorliegenden Erfindung wird erstmalig vorgeschlagen, Vakuum einzusetzen, um die strömende Gasmenge an der Oberfläche der zu erzeugenden Schicht zu reduzieren, um Gasbewegungen, die zu Verwirbelungen an der Oberfläche und damit zu Oberflächenstörungen führen können, zu verringern.

Ein Ablaufen des Verfahrens in einem "unter Vakuum stehenden Prozeßraum" bedeutet im Sinne der Erfindung, daß wenigstens in dem Bauraum, in dem der Körper entsteht, vorzugsweise aber auch in dem Verfahrbereich des Vorratsbehälters, ein besonders niedriger Druck herrscht. Vorzugsweise beträgt der Absolutdruck weniger als 100 mbar. Besonders vorteilhaft ist die Durchführung des Schichtbauverfahrens in einem Prozeßraum bei Absolutdrücken unterhalb von 30 mbar. Ein bevorzugter Arbeitsdruckbereich liegt zwischen 30 mbar und 0,5 mbar.

Nachfolgend wird eine dritte Erfindungsidee beschrieben.

Wie bereits in der DE 10 2008 022 946 angegeben, kann der Vorratsbehälter offen ausgeführt sein. Insbesondere bei Verwendung von pulverförmigem Aufbaumaterial ist es jedoch von Vorteil, einen geschlossenen Vorratsbehälter zu verwenden, da somit ein ungewollten Austreten, insbesondere Herausschwappen von Aufbaumaterial aus dem Vorratsbehälter und damit eine ungewünschte Verschmutzung der Prozeßumgebung vermieden werden kann. Eine weitere Erfindungsidee beruht nun auf der Erkenntnis, daß bei der Verwendung eines geschlossenen Vorratsbehälters das Schließen des Vorratsbehälters durch das Verfahren des Trennelements zum Entfernen des Aufbaumaterials eine Druckerhöhung im Inneren des Vorratsbehälters hervorruft. Dieser Überdruck resultiert aus einer Verdrängung von Aufbaumaterial durch das Trennelement während des Schließvorgangs. Handelt es sich um einen geschlossenen Vorratsbehälter, würde der Überdruck das Aufbaumaterial unter der Klinge des Trennelements hindurch über die Oberfläche hinwegbewegen, was wiederum zu Oberflächenstörungen führen würde. Besonders große Oberflächenstörungen würden dann entstehen, wenn die Verwirbelungen der Gasmoleküle an der Schichtoberfläche wegen einer hohen Verfahrgeschwindigkeit des Trennelements besonders stark sind.

Die Prozeßzeiten können durch ein besonders schnelles Verfahren des Trennelements weiter verkürzt werden, wenn entsprechend einem dritten erfindungsgemäßen Verfahren die auftretende Druckerhöhung im Inneren des Vorratsbehälters ausgeglichen wird. Damit werden Verfahrgeschwindigkeiten des Trennelements von über 250 mm/s möglich.

Der Druckausgleich kann beispielsweise durch den Einsatz aktiver Elemente, wie beispielsweise durch Absaugen oder dergleichen erfolgen.

Auf besonders einfache Art und Weise wird der Druckausgleich ermöglicht, wenn das Ausgleichsvolumen durch die Umgebung des Vorratsbehälters bereitgestellt wird, mit dem der Vorratsbehälter durch eine Ausgleichsöffnung verbunden ist. Dabei ist die Ausgleichsöffnung erfindungsgemäß derart in dem Vorratsbehälter angeordnet ist, daß ein Entweichen von Aufbaumaterial durch die Ausgleichsöffnung ausgeschlossen ist. Insbesondere ist die Ausgleichsöffnung derart vorgesehen, daß bei einer Bewegung des Vorratsbehälters, insbesondere bei dem Verfahren von der Aufbringposition in die Warteposition und zurück, ein Schwappen des Aufbaumaterials in dem Vorratsbehälter und insbesondere ein damit verbundenes Austreten von Aufbaumaterial aus der Ausgleichsöffnung, vermieden wird. Vorzugsweise ist die Ausgleichsöffnung derart ausgeführt, daß auf weitere Elemente zur Verhindern eines ungewollten Austretens von Aufbaumaterial, beispielsweise Schwappbleche oder dergleichen, verzichtet werden kann.

Um dies zu erreichen, wird insbesondere vorgeschlagen, die Öffnung als einen sich über die gesamte Breite des Vorratsbehälters erstreckenden, vorzugsweise senkrecht zur Bewegungsrichtung des Vorratsbehälters angeordneten Trichter auszubilden, der einerseits eine ausreichende Höhe und andererseits eine Engstelle aufweist, über die nur eine geringe Menge Aufbaumaterial zurückschwappen kann, wenn der Vorratsbehälter bei Erreichen der Warteposition abbremst. Ein weiterer Vorteil eines geschlossenen Vorratsbehälters mit Ausgleichsöffnung gegenüber einem offenen Vorratsbehälter ist es, daß der offene Vorratsbehälter deutlich größer ausgeführt sein müßte, insbesondere deutlich höhere Seitenwände aufweisen müßte, um ein ungewolltes Austreten von Aufbaumaterial sicher auszuschließen. Der erfindungsgemäße Vorratsbehälter kann hingegen sehr viel kompakter und damit auch leichter ausgeführt werden, wodurch sehr schnelle Hin- und Her-Bewegungen des Vorratsbehälters möglich werden.

In einer weiteren Ausführungsform der Erfindung ist es vorgesehen, daß die Ausgleichsöffnung nur bei Bedarf geöffnet wird. Damit kann das Risiko eines unbeabsichtigten Entweichens von Aufbaumaterial aus dem Vorratsbehälter weiter minimiert werden.

Selbstverständlich ist es möglich, die vorstehend anhand der verschiedenen Verfahren beschriebenen Erfindungsideen miteinander zu kombinieren, um die durch die einzelnen Verfahren erzielten Effekte zu verstärken. Ebenso ist es möglich, die zur Ausführung der beschriebenen Verfahren ausgebildeten Einrichtungen miteinander zu kombinieren und in einer einzigen Schichtbauanlage einzusetzen.

Erfindungsgemäße Vorrichtungen zur Durchführung der oben beschriebenen Verfahren sind ebenfalls in den Patentansprüchen angegeben. Die angegebenen erfindungsgemäßen Vorrichtungen können darüber hinaus weiterem zur Herstellung eines dreidimensionalen Körpers erforderliche und/oder nützliche Einrichtungen umfassen, insbesondere solche Einrichtungen, wie sie in der DE 10 2008 022 946 angegeben sind. Allerdings ist auch der Einsatz hiervon abweichender Einrichtungen möglich, solange damit das Grundprinzip der "Powder Shuttle"-Technologie verwirklicht wird.

Ausführungsbeispiele der Erfindung werden nachfolgend anhand der Zeichnungen näher erläutert. Hierbei zeigen:
- Fig. 1: eine Abfolge von Verfahrensschritten gemäß dem in DE 10 2008 022 946 beschriebenen Stand der Technik,
- Fig. 2: ein Trennelement gemäß dem in DE 10 2008 022 946 beschriebenen Stand der Technik,
- Fig. 3: einen Verfahrensschritt gemäß der vorliegenden Erfindung,
- Fig. 4: einen weiteren Verfahrensschritt gemäß der vorliegenden Erfindung,
- Fig. 5: eine Abfolge von Verfahrensschritten gemäß der vorliegenden Erfindung.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

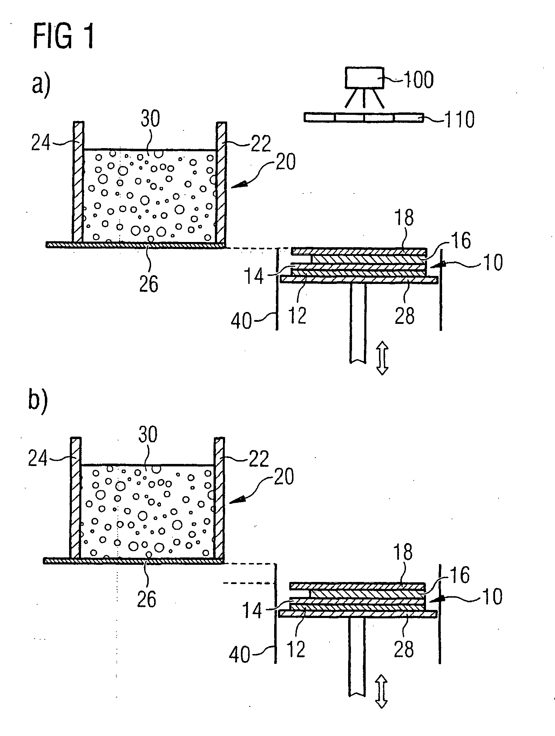

In den Fig. 1a) bis 1g) ist das in DE 10 2008 022 946 beschriebene Verfahren zum Herstellen eines dreidimensionalen Körpers 10 in verschiedenen Verfahrensphasen dargestellt. Als Aufbaumaterial kommt dabei ein Kunststoffpulver, beispielweise Polyamid, zum Einsatz. Es können jedoch beispielsweise auch ein Metall- oder Keramikpulver oder entsprechende Fasern oder Pasten zum Einsatz kommen.

Wie in der Fig. 1a) gezeigt, besteht der Körper 10 bereits aus mehreren übereinanderliegenden, verfestigten bzw. erhärteten Schichten 12, 14, 16, 18. Wie aus dem Stand der Technik allgemein bekannt wurde ein pulverförmiges Beschichtungsmaterial 30 in vorbestimmten Bereichen erhärtet, verfestigt, angeschmolzen oder verschmolzen. Damit hat jede Schicht 12, 14, 16, 18 die gewünschte Kontur des herzustellenden Körpers 10.

Ein Behälter 20 ist in der Fig. 1a) im Vertikalschnitt schematisch gezeigt. Der Behälter 20 ist hier als Vorratsbehälter ausgebildet, in dem das lose Pulver 30 bevorratet ist. Der Behälter 20 weist Wände 22, 24 auf, die zusammen mit einem Boden 26 den Behälter 20 bilden. Die Behälterwände 22, 24 bilden zusammen mit hier nicht dargestellten weiteren Behälterwänden und dem Boden 26 einen im offenen Vorratsraum, in dem das zu verarbeitende Pulver 30 gelagert ist.

Der herzustellende Körper 10 ruht auf einer vertikal beweglichen Trägerplatte 28, die über hier nicht dargestellte Mittel auf und abwärts bewegbar ist. Oberhalb des hier teilweise erstellten Körpers 10 befindet sich eine Strahlungsquelle 100, die beispielsweise ein Array aus einer Vielzahl von Infrarotstrahlern umfassen kann. Alternativ hierzu ist es auch möglich, als Strahlungsquelle einen zu richtenden Laserstrahl vorzusehen.

Bei der hier gezeigten beispielhaften Anordnung befindet sich unterhalb der Strahlungsquelle 100 eine Maske 110, die beispielsweise durch Bedrucken einer Glasplatte geschaffen wird. Auf dieser Maske 110 sind die zu verfestigenden Bereiche einer neu zu erstellenden Schicht 50 freigelassen, die anderen Bereiche der Glasplatte sind für die elektromagnetische Strahlung der Strahlungsquelle 100 im wesentlichen undurchdringbar ausgebildet, beispielweise geschwärzt. Diese Ausgestaltung zeigt somit eine Ausgestaltung, in der das sogenannte Selektive Masken-Sintern (SMS-Verfahren) angewendet wird, bei dem anstelle eines Laserstrahls eine breitflächige Strahlungsquelle wie z.B. ein Array aus Infrarotstrahlern zum Erhärten bzw. Verfestigen definierter Schichtbereiche eingesetzt wird und über eine für jede Schicht neu zu generierende Maske die Festlegung erfolgt, welche Bereiche einer Schicht zu erhärten bzw. zu verfestigen sind.

Im übrigen bildet hier die Trägerplatte 28 zusammen mit seitlichen Wänden einen Auffangbehälter 40, in dem nicht erhärtetes Beschichtungsmaterial oberhalb der Trägerplatte 28 verbleibt. Die Wände können gegenüber der Trägerplatte 28 ortsfest angeordnet sein.

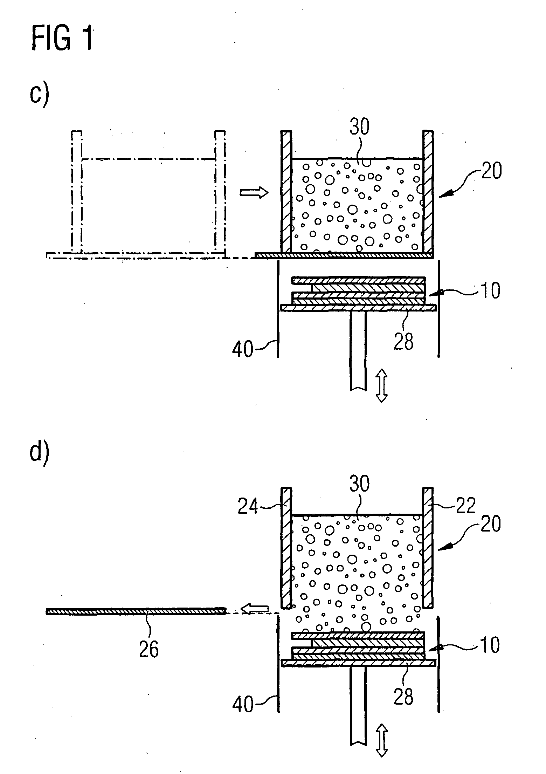

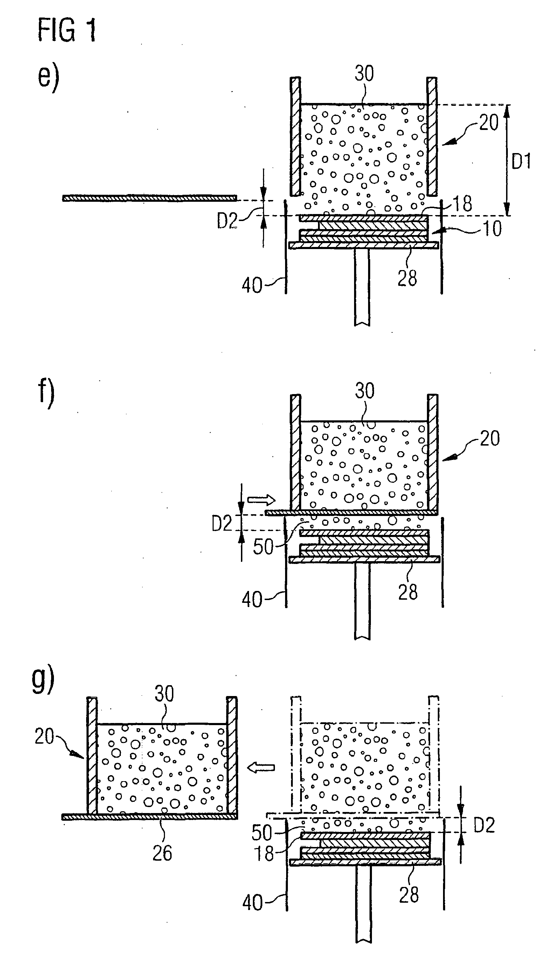

Aus den nachfolgenden Sequenzen gemäß den Fig. 1b) bis 1g) ist ersichtlich, daß der Behälter 20 beweglich gelagert ist, insbesondere ist er in den dargestellten Ansichten gemäß der Fig. 1 horizontal bewegbar. Zudem ist der Behälterboden 26 gegenüber den Wänden 22, 24 verschieblich gelagert.

Entsprechend der Ansicht gemäß der Fig. 1a) ist die Schicht 18 des herzustellenden Körpers 10 mittels der bekannten Techniken erhärtet bzw. verfestigt worden. Zur Herstellung einer neuen Schicht 50 wird nun die Trägerplatte 28 mit den bereits erstellten und erhärteten Schichten 14, 16, 18 um eine bestimmte Weglänge nach unten verfahren. Dieser Schritt ist in der Fig. 1b) dargestellt.

Wie in der Fig. 1c) gezeigt, wird nun der Behälter 20 über die zuletzt hergestellte Schicht 18 verfahren. Daraufhin wird gemäß der Darstellung der Fig. 1d) der Behälterboden 26 in der gezeigten Ansicht nach links herausgezogen. Dabei rutscht das Pulver 30 im Behälter 20 nach unten und bedeckt die zuletzt hergestellte Schicht 18. Diese Verfahrensphase ist auch noch in der Fig. 1e) genauer gezeigt. Durch das Wegziehen oder Herausschieben des Behälterbodens 26 ist somit eine Schicht 50 aus losem Material mit großer Dicke D1 erzielt, die höher oder dicker ist als die tatsächlich zu erstellende Schichtstärke bzw. -dicke D2.

Es wird nun im Schritt gemäß Fig. 1f) das Bodenblech 26 eingefahren, wodurch die Schichtdicke D2 erzielt wird. D2 ist die endgültige Schichtdicke, falls nach dem Einfahren des Trennelements 26 kein Verpressen bzw. Verdichten mehr stattfindet. Mit anderen Worten wird durch den in der Fig. 1 dargestellten beispielhaften Verfahrensablauf zunächst eine Schicht auf der zuletzt erstellten Schicht 18 aus zu verfestigendem Material 30 gebildet, die eine höhere Schichtstärke bzw. Schichtdicke hat als die, die später dann als endgültige Schichtdicke D2 gewünscht wird. Durch das Wiedereinfahren des Bodens 26 unter den Behälter 20 wird die Schichtdicke D2 der neu herzustellenden Schicht 50 erzielt. Dies ist insbesondere in der Fig. 1f) gut zu erkennen.

Sodann wird im Schritt gemäß Fig. 1g) der Behälter 20 mit dem wieder eingefahrenen Trennelement 26 zurück in die linke Ausgangsstellung gefahren. Nachdem nun durch das Herausfahren des Behälters 20 zusammen mit dem Bodenblech 26, das hier als Trennelement funktioniert, ist die neue Schicht 50 mit gewünschter Schichtdicke D2 auf der zuletzt verfestigten Schicht 18 ausgebildet. Es kann nun mittels der eingangs erwähnten Strahlungsquelle 100 die gewünschte selektive Verfestigung bzw. Erhärtung des losen Beschichtungsmaterials 30 der Schicht 50 durchgeführt werden. Danach können mit einer neuen Sequenz der Verfahrensschritte gemäß Fig. 1a) bis 1g) weitere Schichten des zu bildenden Körpers 10 erzeugt werden.

Eine mögliche alternative Ausführungsform kann auch noch einen weiteren Schritt vorsehen, bei dem zwischen dem Schritt gemäß Fig. 1f) und dem Schritt gemäß Fig. 1g) die Trägerplatte 28 etwas nach oben verfahren wird, wodurch die erstellte Schicht 50 verdichtet wird, da ja der Boden 26 sich noch oberhalb der Schicht 50 befindet. Alternativ kann der Behälter 20 um eine definierte Wegstrecke nach unten verfahren werden, um so die Schicht 50 auf die vorgegebene endgültige Schichtdicke D2 zu verdichten.

Erst nach dem eventuellen Verdichtungsschritt erfolgt dann das Wiederzurückfahren des Behälters 20, wie es in der Fig. 1g) dargestellt ist. Dieser mögliche Sonderfall eines erfindungsgemäßen Ausführungsbeispiels für ein Verfahren zum Herstellen eines dreidimensionalen Körpers 10 kann bei bestimmten Materialien vorteilhaft sein, insbesondere um eine höhere Dichte in der zu erstellenden Schicht 50 zu erzielen.

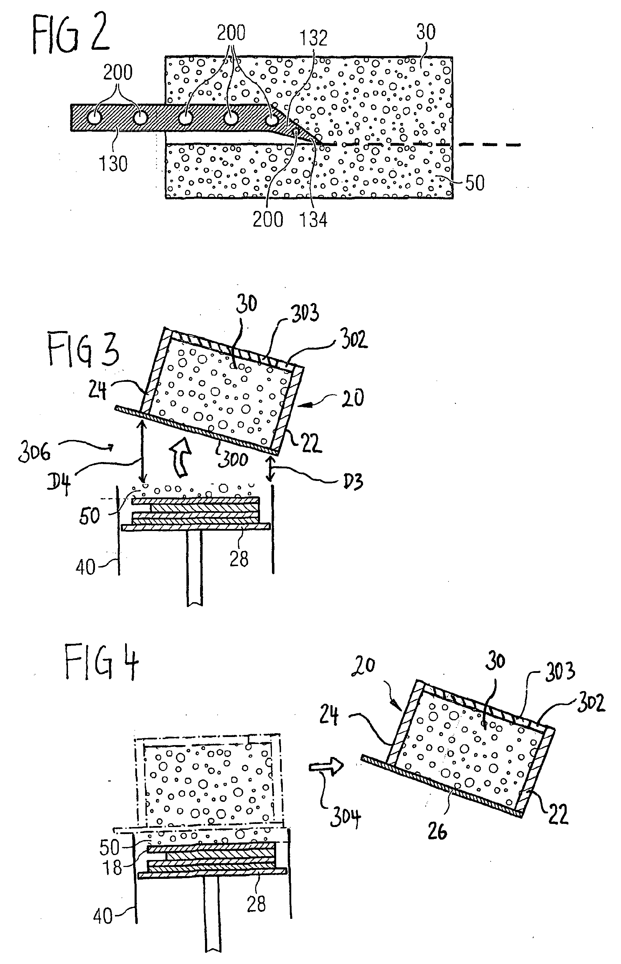

Den zuvor erläuterten Verfahren zur Herstellung eines dreidimensionalen Körpers 10 aus mehreren Schichten 12, 14, 16, 18 ist gemein, daß erstmals beim Erstellen der endgültigen Schichtdicke D2 der herzustellenden Schicht 50 die hierbei wirkenden Kräfte auf die zu erstellende Schicht 50 wie auch auf die darunter liegende Schicht 18 sowie eventuell auf die weiteren Schichten 12, 14, 16 geringer sind als bisher und damit die unter Umständen auftretenden Probleme unter Umständen vermieden werden können. Die Fig. 2 zeigt ein Detail möglicher Trenneinrichtungen, hier einer Platte 130. Das Trennelement 130 weist hier die Vorderkante 132 auf, die speziell in eine äußerst dünne Schneide 134 ausläuft, so daß eine problemlose Trennung des Materials 30 erfolgen kann und dabei die neu zu erstellende Schicht 50 mit definierter Schichtstärke D2 geschaffen wird. Dabei hat bei dieser beispielhaften Ausführungsform der Platte 130 die Schneide 134 einen Hinterschnitt, so daß unmittelbar hinter der Schneide 134 das Material der neuen Schicht 50 nicht mehr an der Platte 130 oder der Vorderkante 132 entlang gleitet, wodurch unter Umständen auftretende Ablösungsprobleme vermieden werden.

Anzumerken ist, daß in einer beispielhaften Ausführungsform in dem Trennelement 130 und/oder der Schneide 134 Kühlelemente wie z.B. Kühlleitungen 200 vorhanden sind, um eine geeignete Kühlung einer zu verfestigenden Schicht 50 erzielen zu können. Hier sind beispielsweise Kühlleitungen 200 schlangenlinienförmig im Trennelement 130 ausgebildet, durch die ein Kühlmedium wie z.B. Wässer oder andere Fluide strömen. Die Kühlleitungen 200 sind in einen (nicht gezeigten) Kühlkreislauf mit entsprechenden Elementen eingegliedert.

Alternativ kann eine entsprechende Ausgestaltung auch zur gleichmäßigen Erwärmung des Trennelements 130 und/oder der Schneide 134 vorgesehen sein. Es ist auch eine Kombination von Kühl- und Wärmeelementen 200 in dem Trennelement 130 denkbar. Beispielsweise könnte hierzu entweder ein kühlendes oder erwärmendes Fluid durch die Leitungen 200 gepumpt werden.

Das in Fig. 1 dargestellte Verfahren zum Herstellen eines dreidimensionalen Körpers 10 aus einzelnen, verfestigten Schichten 12, 14, 16, 18, die aus einem Beschichtungsmaterial 30 wie Pulver oder fluiden Materialen erzeugt werden zeichnet sich durch folgende Verfahrensschritte aus:

Aufbringen eines zu verfestigenden Beschichtungsmaterials 30 in einer ersten Schichtdicke D1 auf einer Unterlage oder einer bereits verfestigten Schicht 18 des herzustellenden Körpers 10,

Wegnehmen eines Teils des aufgebrachten, noch nicht verfestigten Beschichtungsmaterials 30, so daß eine neue Schicht 50 aus unverfestigtem Beschichtungsmaterial 30 verbleibt, die zumindest in vorbestimmten Bereichen eine zweite Schichtdicke D2 hat, die geringer ist als die erste Schichtdicke D1, und

Verfestigen des verbleibenden Beschichtungsmaterials 30 der neuen Schicht 50 an vorbestimmten Stellen zur Erzeugung einer gewünschten Schichtkontur des dreidimensionalen Körpers 10.

Vorzugsweise zeichnet sich das Verfahren darüber hinaus dadurch aus, daß bei dem Schritt des Wegnehmens eines Teils des aufgebrachten, noch nicht verfestigten Beschichtungsmaterials 30, das sich oberhalb der zweiten Schichtdicke D2 befindet, von dem unterhalb der zweiten Schichtdicke D2 befindlichen Beschichtungsmaterial 30 getrennt, insbesondere abgetrennt wird.

Vorzugsweise zeichnet sich das Verfahren darüber hinaus dadurch aus, daß das Wegnehmen von Beschichtungsmaterial 30 ein Verfahren eines im wesentlichen parallel zu der zu erzeugenden neuen Schicht 50 sich erstreckendes Trennelement 26 umfaßt.

Vorzugsweise zeichnet sich das Verfahren darüber hinaus dadurch aus, daß gleichzeitig mit dem Schritt des Wegnehmens von Beschichtungsmaterial 30 das weggenommene Beschichtungsmaterial 30 in einen Vorratsbehälter 20 für Beschichtungsmaterial 30 gefördert wird.

Vorzugsweise zeichnet sich das Verfahren darüber hinaus dadurch aus, daß das Aufbringen des Beschichtungsmaterials 30 in der ersten Schichtdicke D1 und das Wegnehmen von Beschichtungsmaterial 30 zur Erzeugung einer neuen Schicht 50 aus Beschichtungsmaterial 30 mit der zweiten Schichtdicke D2 in getrennten Durchläufen oder aber alternativ dazu in einem Durchlauf durchgeführt werden.

Vorzugsweise zeichnet sich das Verfahren darüber hinaus dadurch aus, daß das Aufbringen des Beschichtungsmaterials 30 mit der ersten Schichtdicke D1 erfolgt, die ungefähr 1,2-5000, insbesondere etwa 10-1000 mal so dick ist wie die entgültige definierte Schichtdicke D2 der neuen Schicht 50 aus zu verfestigendem Beschichtungsmaterial 30.

Vorzugsweise zeichnet sich das Verfahren darüber hinaus dadurch aus, daß das Aufbringen des Beschichtungsmaterials 30 in der ersten Schichtdicke D1 mit Hilfe eines verschiebbar gelagerten Bodenelements 26 eines Vorratsbehälters 20 mit darin befindlichem Beschichtungsmaterial 30 erfolgt.

Vorzugsweise zeichnet sich das Verfahren darüber hinaus dadurch aus, daß das Aufbringen des Beschichtungsmaterials 30 in der ersten Schichtdicke D1 durch Verschieben eines beweglich gelagerten Bodenelements 26 eines Vorratsbehälters 20 mit darin befindlichem Beschichtungsmaterial 30 erfolgt, so daß das Beschichtungsmaterial 30 auf eine bereits verfestigte Schicht 18 erfolgt.

Vorzugsweise zeichnet sich das Verfahren darüber hinaus dadurch aus, daß verschiedene Schichten 12, 14, 16, 18, 50 des Körpers 10 aus sich unterscheidenden Beschichtungsmaterialen 30 erstellt werden.

Vorzugsweise zeichnet sich das Verfahren darüber hinaus dadurch aus, daß vor dem Verfestigen des verbleibenden Beschichtungsmaterials 30 das Beschichtungsmaterial 30 verdichtet wird,

Vorzugsweise zeichnet sich das Verfahren darüber hinaus dadurch aus, daß der Schritt des Verdichtens des verbleibenden Beschichtungsmaterials 30 durch Andrücken eines Formkörpers 26, 130 oder durch Hochfahren des bereits hergestellten Teils des Körpers 10 mit der darauf befindlichen definierten Schicht 50 aus unverfestigtem Beschichtungsmaterial 30 gegen einen Formkörper 26, 130 erfolgt.

Vorzugsweise zeichnet sich das Verfahren darüber hinaus dadurch aus, daß vor dem Verfestigen des verbleibenden Beschichtungsmaterials 30 das Beschichtungsmaterial durch die Vorderkante des Formkörpers 26, 130 verdichtet wird.

Vorzugsweise zeichnet sich das Verfahren darüber hinaus dadurch aus, daß das in der gewünschten Schichtdicke aufgebrachte Beschichtungsmaterial 30 erwärmt oder gekühlt wird, insbesondere durch einen Formkörper 26, 130 geheizt wird.

Vorzugsweise zeichnet sich das Verfahren darüber hinaus dadurch aus, daß der Wegnehmvorgang mittels eines vibrierenden Formkörpers 26, 130 ausgeführt wird.

Die in Fig. 1 dargestellte Vorrichtung zum Herstellen eines dreidimensionalen Körpers 10 aus einzelnen verfestigten Schichten 12, 14, 16, 18, 50 aus einem Beschichtungsmaterial 30 wie Pulver oder fluidem Material umfaßt

eine Aufbringeinrichtung 20, die dazu ausgebildet ist, ein Beschichtungsmaterial 30 in einer ersten Schichtdicke D1 auf einer Unterlage 28 oder einer bereits verfestigten Schicht 18 des herzustellenden Körpers 10 aufzubringen,

eine Reduziereinrichtung 26, 130 die dazu ausgebildet ist, einen Teil des aufgebrachten, noch nicht verfestigten Beschichtungsmaterials 30 derart zu entfernen, daß eine definierte Schicht 50 aus unverfestigtem Beschichtungsmaterial 30 verbleibt, die zumindest in vorbestimmten Bereichen eine definierte zweite Schichtdicke D2 hat, die geringer ist als die erste Schichtdicke D1, und

eine Verfestigungseinrichtung 100, die dazu ausgebildet ist, das verbleibende Beschichtungsmaterial 30 an vorbestimmten Stellen zur Erzeugung einer gewünschten Schichtkontur des dreidimensionalen Körpers 10 zu verfestigen.

Vorzugsweise zeichnet sich die Vorrichtung darüber hinaus dadurch aus, daß die Aufbringeinrichtung und die Reduziereinrichtung in einer bewegbaren, insbesondere verschiebbar gelagerten Aufbring- und Reduziereinheit integriert sind.

Vorzugsweise zeichnet sich die Vorrichtung darüber hinaus dadurch aus daß mehrere Aufbringeinrichtungen 20 und/oder Reduziereinrichtungen 26, 130 vorhanden sind.

Vorzugsweise zeichnet sich die Vorrichtung darüber hinaus dadurch aus, daß die Aufbringvorrichtung einen beweglich, insbesondere verschiebbar gelagerten Vorratsbehälter 20 zur Aufnahme von Beschichtungsmaterial 30 umfaßt, wobei der Vorratsbehälter insbesondere auch geschlossen sein kann.

Vorzugsweise zeichnet sich die Vorrichtung darüber hinaus dadurch aus, daß der Vorratsbehälter 20 zur Aufnahme von Beschichtungsmaterial 30 ein gegenüber Behälterwänden 22, 24 beweglich, insbesondere im wesentlichen horizontal verschiebbar gelagertes Trennelement 26 umfaßt, wobei das Trennelement 26 z.B. an der der erstellten Schicht 50 zugewandten Außenfläche als Formkörper 26 ausgebildet ist.

Vorzugsweise zeichnet sich die Vorrichtung darüber hinaus dadurch aus, daß die Reduziereinrichtung ein bewegbares flächiges Trennelement 26 ist, das eine schmale Trennkante 134 aufweist.

Vorzugsweise zeichnet sich die Vorrichtung darüber hinaus dadurch aus, daß die Reduziereinrichtung 26, 130 horizontal und/oder senkrecht zur Oberseite der herzustellenden Schicht 50 bewegbar ist.

Vorzugsweise zeichnet sich die Vorrichtung darüber hinaus dadurch aus, daß eine Trageinrichtung 28 vorhanden ist, auf welcher der herzustellende Körper 10 erstellt wird, wobei die Trageinrichtung 28 vorzugsweise im wesentlichen vertikal bewegbar ist

Vorzugsweise zeichnet sich die Vorrichtung darüber hinaus dadurch aus, daß um die Trageinrichtung 28 herum mehrere Aufbringeinrichtungen 20 und/oder Reduziereinrichtungen 26, 130 angeordnet sind.

Vorzugsweise zeichnet sich die Vorrichtung darüber hinaus dadurch aus, daß die Reduziereinrichtung 26, 130 beheizbar und/oder kühlbar und/oder in Vibrationen versetzbar ist.

Die zuvor beschrieben Vorrichtung bzw. das zuvor beschriebene Verfahren gemäß DE 10 2008 022 946 dient als Grundlage für die nachfolgend erläuterte Erfindung. Mit anderen Worten umfaßt die erfindungsgemäße Vorrichtung einige oder alle beschriebenen Bauelemente der zuvor beschriebenen Vorrichtung bzw. das erfindungsgemäße Verfahren umfaßt einige oder alle zuvor beschriebenen Verfahrensschritte.

In einer Ausführungsform der Erfindung wird ein im wesentlichen geschlossener Vorratsbehälter 20 verwendet, der in einem ersten Teilschritt in der Aufbringposition mit Hilfe einer nicht näher dargestellten, beispielsweise hydraulisch betätigbaren Kippeinrichtung gekippt wird derart, daß sich der Abstand zwischen der Unterseite 300 des Vorratsbehälters 20 einerseits und der zu verfestigenden Schicht 50 andererseits ungleichmäßig ändert. Mit anderen Worten wird der Vorratsbehälter 20 schräg angehoben. Fig. 3 zeigt den Vorratsbehälter 20 am Ende des ersten Teilschrittes, der sich zeitlich betrachtet, im Anschluß an das in Fig. 1f) dargestellte Verschließen des Vorratsbehälters 20 anschließt.

In der abgebildeten Ausführungsform wird der Vorratsbehälter 20 derart gekippt, daß vergleichsweise schnell eine große Öffnung 306 zwischen der Unterseite 300 des Vorratsbehälters 20 einerseits und der Schicht 50 andererseits entsteht, wobei die bei der Bewegung des Vorratsbehälters 20 von der Aufbringposition in die Warteposition in Bewegungsrichtung 304 gesehen vordere Seitenwand 22 des Vorratsbehälters 20 weniger stark als die gegenüberliegende Seitenwand 24 angehoben wird. Bei dem Ankippen wird mit anderen Worten zwischen der Unterseite 300 des Vorratsbehälters 20 und der Schicht 50 im Bereich der Seitenwand 22 ein erster Abstand D3 und im Bereich der gegenüberliegenden Seitenwand 24 ein zweiter, größerer Abstand D4 geschaffen, so daß der Vorratsbehälter 20 insgesamt von der zu verfestigenden Schicht 50 abgehoben ist und die Unterseite 300 des Vorratsbehälters 20 nichtparallel zu der Schicht 50 angeordnet ist.

Danach wird der Vorratsbehälter 20 in einem zweiten Teilschritt horizontal in Bewegungsrichtung 304 in die Ausgangsstellung (Warteposition) verfahren, WO er vorzugsweise in gekippter Stellung verbleibt, bis er wieder in die Aufbringposition über den zu erstellenden Körper 10 bewegt und erneut in die waagerechte Position abgekippt wird. Fig. 4 zeigt die Anordnung des Vorratsbehälters 20 in der Warteposition und entspricht insoweit Fig. 1g).

Der Vorratsbehälter weist eine in den Fig. 3 und 4 nur schematisch dargestellte Ausgleichsöffnung 302 auf, die den Vorratsbehälter 20 mit der Prozeßumgebung verbindet. Die Ausgleichsöffnung 302 ist dabei derart ausgeführt, daß das Austreten von Aufbaumaterial 30 aus der Ausgleichsöffnung 302 vermieden wird.

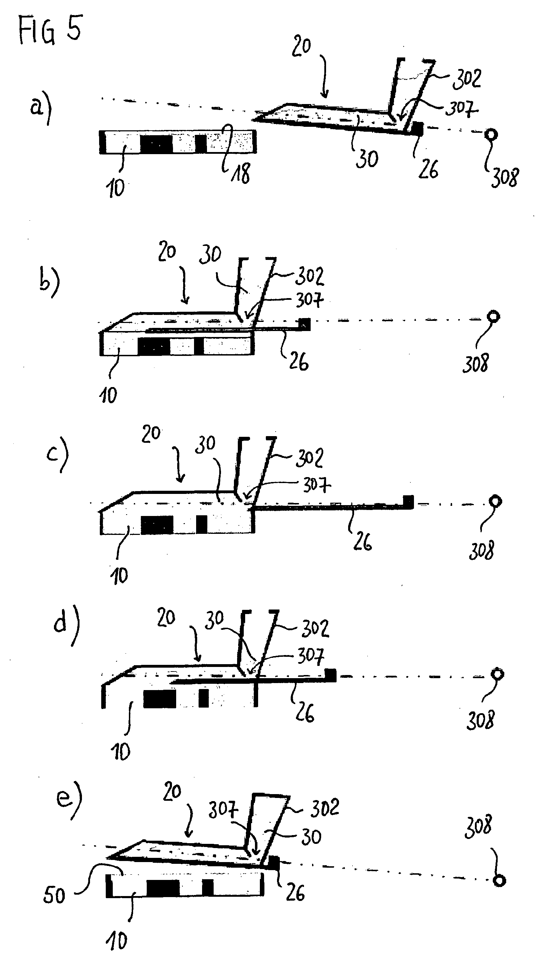

In den Fig. 5a) bis 5e) sind verschiedene Verfahrensschritte dargestellt. In Fig. 5a) befindet sich der Vorratsbehälter 20 in seiner Warteposition, aus der heraus er in seine Aufbringposition über eine bereits vorhandene Schicht 18 gebracht wird. Anschließend wird das Trennelement 26 entfernt, wodurch sich der Boden des Vorratsbehälters 20 öffnet und Aufbaumaterial aus dem Vorratsbehälter auf die bereits vorhandene Schicht 18 aufgebracht wird, wie dies in Fig. 5b) dargestellt ist. Nachdem das Trennelement 26 vollständig herausgezogen wurde, siehe Fig. 5c), wird es in seine Ausgangsposition zurückbewegt, wodurch der Vorratsbehälter 20 wieder geschlossen wird. Hierdurch wird die "dick" aufgebrachte neue Schicht durchtrennt, wobei unterhalb des Trennelements die im Anschluß zu verfestigende Schicht 50 geringerer Dicke verbleibt. Dieser Vorgang ist in Fig. 5d) illustriert. Daraufhin erfolgt das ungleichmäßige Abheben des Vorratsbehälters 20 von der Schicht 50, wie in Fig. 5e) dargestellt, woran sich das Zurückfahren des Vorratsbehälters 20 in die Warteposition anschließt.

Wie in den Fig. 5 abgebildet, ist die Ausgleichsöffnung 302 als ein sich über die gesamte Breite des Vorratsbehälters 20 erstreckender Trichter ausgebildet, der in dem Behälterdeckel 303 oberhalb der Seitenwand 22 des Vorratsbehälters 20 vorgesehen ist. Der Trichter 302 verfügt über eine ausreichende Höhe und weist eine Engstelle 307 auf, über die nur eine geringe Menge Aufbaumaterial 30 zurückschwappen kann, wenn der Vorratsbehälter 20 bei Erreichen der Warteposition abbremst. Vorteilhafterweise ist der Trichter 302 derart ausgebildet, daß er zum einfachen und schnellen Nachfüllen von Aufbaumaterial 30 dienen kann. Vorzugsweise erfolgt das Auffüllen, wenn sich der Vorratsbehälter 20 in der Warteposition befindet. Ein einfaches und schnelles Auffüllen des Vorratsbehälters 20 ist von Vorteil, da der Vorratsbehälter 20 dann vergleichsweise klein ausgeführt werden, wenn er lediglich das Aufbaumaterial 30 für eine geringe Anzahl von Schichten 50 beinhalten muß. Ein derart klein ausgeführter Vorratsbehälter 20 zeichnet sich durch eine besonders geringe Masse aus und kann aus diesem Grund besonders einfach und schnell hin und her bewegt werden.

Der Drehpunkt 308 für die Kippbewegung des Vorratsbehälters 20 befindet sich vorteilhafterweise im Bereich der Warteposition des Vorratsbehälters 20. Vorzugsweise wird mit nur einem einzigen Antrieb, der in den Figuren nicht abgebildet ist, sowohl das Verfahren des Vorratsbehälters 20 zwischen Aufbring- und Warteposition und das Verfahren des Trennelements 26 zum Öffnen und Schließen des Vorratsbehälters 20, als auch das Kippen bzw. Anheben und Absenken des Vorratsbehälters 20 verwirklicht. Zugleich kann somit auf besonders einfache Weise ein Pressen der zu verfestigenden Schicht 50 durch die Unterseite 300 des Vorratsbehälters 20 erfolgen, bevor der Vorratsbehälter 20 eine Horizontalbewegung in seine Warteposition vollführt.

Die Ausgleichsöffnung 302 in dem Trichter kann in einer Ausführungsform der Erfindung, wie in Fig. 5e) dargestellt, nach Abschluß des Druckausgleiches verschlossen werden.

In einer weiteren Ausführungsform der Erfindung läuft das Verfahren im Vakuum ab. Mit anderen Worten steht der gesamte Prozeßraum unter Vakuum. Auf die Darstellung des Prozeßraumes wurde aus Gründen der Übersichtlichkeit ebenso verzichtet, wie auf die Darstellung entsprechender Pumpen etc. bzw. die Darstellung von Dichtelementen zur Abdichtung des zum Verfahren des Trennelementes 26 erforderlichen Zwischenraumes zwischen Trennelement 26 und Vorratsbehälter 20.

## Patentansprüche

1. Verfahren zur Herstellung eines dreidimensionalen Körpers (10) durch selektives Verfestigen eines schichtweise aufgebrachten Aufbaumaterials (30), bei dem Aufbaumaterial (30) mit Hilfe einer Aufbringeinrichtung auf eine Unterlage (28) oder eine bereits verfestigte Schicht (18) des herzustellenden Körpers (10) aufgebracht wird,
wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition eine Aufbringposition und vor dem Verfestigen der Schicht (50) von der Aufbringposition zurück in die Warteposition überführt wird,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** das Überführen des Vorratsbehälters (20) von der Aufbringposition in die Warteposition ein Abheben des Vorratsbehälters (20) von der zu verfestigenden Schicht (50) umfaßt
und/oder
**daß** das Überführen des Vorratsbehälters (20) von der Warteposition in die Aufbringposition ein Absenken des Vorratsbehälters (20) umfaßt.

2. Verfahren nach Anspruch 1, **dadurch gekennzeichnet,**
**daß** der Abstand (D3) zwischen der Unterseite (300) des Vorratsbehälters (20) einerseits und der zu verfestigenden Schicht (50) andererseits während des Überführens des Vorratsbehälters (20) von der Aufbringposition in die Warteposition, insbesondere vor einem horizontalen Verfahren des Vorratsbehälters (20) in die Warteposition, an mindestens einem Punkt derart verändert wird, daß die Unterseite (300) des Vorratsbehälters (20) nichtparallel zu der zu verfestigenden Schicht (50) angeordnet ist
und/oder
**daß** der Abstand (D3) zwischen der Unterseite (300) des Vorratsbehälters (20) einerseits und der bereits verfestigten Schicht (18) andererseits während des Überführens des Vorratsbehälters (20) von der Warteposition in die Aufbringposition, insbesondere im Anschluß an ein horizontales Verfahren des Vorratsbehälters (20) aus der Warteposition heraus, derart verändert wird, daß die Unterseite (300) des Vorratsbehälters (20) im wesentlichen parallel zu der bereits verfestigten Schicht (18) angeordnet ist.

3. Verfahren zur Herstellung eines dreidimensionalen Körpers (10) durch selektives Verfestigen eines schichtweise aufgebrachten Aufbaumaterials (30), bei dem Aufbaumaterial (30) mit Hilfe einer Aufbringeinrichtung auf eine Unterlage (28) oder eine bereits verfestigte Schicht (18) des herzustellenden Körpers (10) aufgebracht wird,
wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition eine Aufbringposition und vor dem Verfestigen der Schicht (50) von der Aufbringposition zurück in die Warteposition überführt wird,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** die Bewegung des Vorratsbehälters (20) von der Aufbringposition in die Warteposition und/oder von der Warteposition in die Aufbringposition und/oder das Verfahren des Trennelements (26, 130) zum Öffnen und/oder Schließen des Vorratsbehälters (20) eine sich an der Oberfläche der zu verfestigenden Schicht (50) bzw. der bereits verfestigten Schicht (18) entlangbewegende Gasströmung hervorruft und daß das Verfahren unter Vakuum abläuft, um die an der Oberfläche der zu verfestigenden Schicht (50) bzw. der bereits verfestigten Schicht (18) entlangströmende Gasmenge zu reduzieren, mit dem Ziel, Gasbewegungen, die zu Verwirbelungen an der Schichtoberfläche und damit zu Oberflächenstörungen führen können, zu verringern.

4. Verfahren zur Herstellung eines dreidimensionalen Körpers (10) durch selektives Verfestigen eines schichtweise aufgebrachten Aufbaumaterials (30), bei dem Aufbaumaterial (30) mit Hilfe einer Aufbringeinrichtung auf eine Unterlage (28) oder eine bereits verfestigte Schicht (18) des herzustellenden Körpers (10) aufgebracht wird,
wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition in eine Aufbringposition und vor dem Verfestigen der Schicht (50) von der Aufbringposition zurück in die Warteposition überführt wird,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** das Verfahren des Trennelements (26, 130) zum Schließen des Teils des Vorratsbehälters (20) eine Druckerhöhung im Inneren des Vorratsbehälters (20) hervorruft und daß die Druckerhöhung ausgeglichen wird.

5. Verfahren nach Anspruch 4, **dadurch gekennzeichnet,**
**daß** ein Ausgleichsvolumen durch die Umgebung des Vorratsbehälters (20) bereitgestellt wird, mit dem der Vorratsbehälter (20) durch eine Ausgleichsöffnung (302) verbunden ist, wobei die Ausgleichsöffnung (302) derart in dem Vorratsbehälter (20) angeordnet ist, daß ein Entweichen von Aufbaumaterial (30) durch die Ausgleichsöffnung (302) ausgeschlossen ist.

6. Verfahren nach Anspruch 5, **dadurch gekennzeichnet, daß** die Ausgleichsöffnung (302) nur bei Bedarf geöffnet wird.

7. Vorrichtung zur Herstellung eines dreidimensionalen Körpers (10) durch selektives Verfestigen eines schichtweise aufgebrachten Aufbaumaterials (30), mit einer Aufbringeinrichtung, mit deren Hilfe Aufbaumaterial (30) auf eine Unterlage (28) oder eine bereits verfestigte Schicht (18) des herzustellenden Körpers (10) aufgebracht wird, wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition eine Aufbringposition und vor dem Verfestigen der Schicht (50) von der Aufbringposition zurück in die Warteposition überführbar ist,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** die Aüfbringeinrichtung ausgebildet ist zum Abheben des Vorratsbehälters (20) von der zu verfestigenden Schicht (50) während des Überführens des Vorratsbehälters (20) von der Aufbringposition in die Warteposition
und/oder
**daß** die Aufbringeinrichtung ausgebildet ist zum Absenken des Vorratsbehälters (20) während des Überführens des Vorratsbehälters (20) von der Warteposition in die Aufbringposition.

8. Vorrichtung zur Herstellung eines dreidimensionalen Körpers (10) durch selektives Verfestigen eines schichtweise aufgebrachten Aufbaumaterials (30), mit einer Aufbringeinrichtung, mit deren Hilfe Aufbaumaterial (30) auf eine Unterlage (28) oder eine bereits verfestigte Schicht (18) des herzustellenden Körpers (10) aufgebracht wird, wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition eine Aufbringposition und vor dem Verfestigen der Schicht (50) von der Aufbringposition zurück in die Warteposition überführbar ist,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** die Bewegung des Vorratsbehälters (20) von der Aufbringposition in die Warteposition und/oder von der Warteposition in die Aufbringposition und/oder das Verfahren des Trennelements (26, 130) zum Öffnen und/oder Schließen des Vorratsbehälters (20) eine sich an der Oberfläche der zu verfestigenden Schicht (50) bzw. der bereits verfestigten Schicht (18) entlangbewegende Gasströmung hervorruft und daß ein unter Vakuum stehender Prozeßraum vorgesehen ist, in dem das Verfahren abläuft, um die an der Oberfläche der zu verfestigenden Schicht (50) bzw. der bereits verfestigten Schicht (18) entlangströmende Gasmenge zu reduzieren, mit dem Ziel, Gasbewegungen, die zu Verwirbelungen an der Schichtoberfläche und damit zu Oberflächenstörungen führen können, zu verringern.

9. Vorrichtung zur Herstellung eines dreidimensionalen Körpers (10) durch selektives Verfestigen eines schichtweise aufgebrachten Aufbaumaterials (30), mit einer Aufbringeinrichtung, mit deren Hilfe Aufbaumaterial (30) auf eine Unterlage (28) oder eine bereits verfestigte Schicht (18) des herzustellenden Körpers (10) aufgebracht wird, wobei die Aufbringeinrichtung einen beweglich gelagerten Vorratsbehälter (20) zur Aufnahme von Aufbaumaterial (30) umfaßt, der zum Aufbringen einer Schicht (50) von einer Warteposition eine Aufbringposition und vor dem Verfestigen der Schicht (50) von der Aufbringposition zurück in die Warteposition überführbar ist,
und wobei der Vorratsbehälter (20) ein gegenüber Behälterwänden (22, 24) beweglich, insbesondere verschiebbar gelagertes, sich in der Aufbringposition im wesentlichen parallel zu der zu erzeugenden Schicht (50) erstreckendes Trennelement (26, 130) aufweist, durch dessen Verfahren ein Teil des in der Aufbringposition angeordneten Vorratsbehälters (20) zunächst zum Aufbringen von Aufbaumaterial (30) geöffnet wird,
**dadurch gekennzeichnet,**
**daß** der geöffnete Teil des in der Aufbringposition angeordneten Vorratsbehälters (20) durch ein Verfahren des Trennelements (26, 130) anschließend zum Herstellen der zu verfestigenden Schicht (50) durch teilweises Entfernen des aufgebrachten, noch nicht verfestigten Aufbaumaterials (30) wieder geschlossen wird,
und **daß** das Verfahren des Trennelements (26, 130) zum Schließen des Teils des Vorratsbehälters (20) eine Druckerhöhung im Inneren des Vorratsbehälters (20) hervorruft und daß eine Druckausgleichseinrichtung zum Ausgleich dieser Druckerhöhung vorgesehen ist.

## Claims

1. A method for manufacturing a three-dimensional object (10) by selective solidification of a build material (30) applied in layers, in which build material (30) is applied with the aid of an application device onto a substrate (28) or an already solidified layer (18) of the object (10) to be manufactured,
the application device including a movably mounted reservoir container (20) for the reception of build material (30), which reservoir container (20) is, for application of a layer (50), transferred from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said separating container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and transfer of the reservoir container (20) from the application position into the waiting position includes a lifting of the reservoir container (20) away from the layer (50) to be solidified
and/or
transfer of the reservoir container (20) from the waiting position into the application position includes a lowering of the reservoir container (20).

2. The method according to Claim 1, **characterized in that**
the spacing (D3) between the underside (300) of the reservoir container (20) on the one hand and the layer (50) to be solidified on the other hand is modified at at least one point, during transfer of the reservoir container (20) from the application position into the waiting position, in particular prior to a horizontal displacement of the reservoir container (20) into the waiting position, in such a way that the underside (300) of the reservoir container (20) is arranged in non-parallel fashion with respect to the layer (50) to be solidified
and/or
the spacing (D3) between the underside (300) of the reservoir container (20) on the one hand and the already solidified layer (18) on the other hand is modified, during transfer of the reservoir container (20) from the waiting position into the application position, in particular subsequently to a horizontal displacement of the reservoir container (20) out of the waiting position, in such a way that the underside (300) of the reservoir container (20) is arranged substantially parallel to the already solidified layer (18).

3. A method for manufacturing a three-dimensional object (10) by selective solidification of a build material (30) applied in layers, in which build material (30) is applied with the aid of an application device onto a substrate (28) or an already solidified layer (18) of the object (10) to be manufactured,
the application device including a movably mounted reservoir container (20) for the reception of build material (30), which reservoir container (20) is, for application of a layer (50), transferred from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said reservoir container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and movement of the reservoir container (20) from the application position into the waiting position and/or from the waiting position into the application position, and/or displacement of the separating element (26, 130) for opening and/or closing the reservoir container (20), brings about a gas flow moving along the surface of the layer (50) to be solidified or along the surface of the layer (18) already solidified, and the method proceeds under vacuum in order to reduce the quantity of gas flowing along the surface of the layer (50) to be solidified or along the surface of the layer (18) already solidified, with the goal of reducing gas movements that can result in turbulence at the layer surface and thus in surface disruptions.

4. A method for manufacturing a three-dimensional object (10) by selective solidification of a build material (30) applied in layers, in which build material (30) is applied with the aid of an application device onto a substrate (28) or an already solidified layer (18) of the object (10) to be manufactured,
the application device including a movably mounted reservoir container (20) for the reception of build material (30), which reservoir container (20) is, for application of a layer (50), transferred from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said reservoir container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and displacement of the separating element (26, 130) for closure of the part of the reservoir container (20) brings about a pressure increase in the interior of the reservoir container (20), and the pressure increase is equalized.

5. The method according to Claim 4, **characterized in that** an equalization volume is made available by the surroundings of the reservoir container (20) to which the reservoir container (20) is connected through an equalization opening (302), the equalization opening (302) being arranged in the reservoir container (20) in such a way that an escape of build material (30) through the equalization opening (302) is precluded.

6. The method according to Claim 5, **characterized in that** the equalization opening (302) is opened only as required.

7. An apparatus for manufacturing a three-dimensional object (10) by selective solidification of a build material (30) applied in layers, having an application device with the aid of which build material (30) is applied onto a substrate (28) or an already solidified layer (18) of the object (10) to be manufactured,
the application device including a movably mounted reservoir container (20) for the reception of build material (30), which reservoir container (20) is, for application of a layer (50), transferable from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said reservoir container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and the application device is embodied to lift the reservoir container (20) away from the layer (50) to be solidified during transfer of the reservoir container (20) from the application position into the waiting position,
and/or
the application device is embodied to lower the reservoir container (20) during transfer of the reservoir container (20) from the waiting position into the application position.

8. An apparatus for manufacturing a three-dimensional object (10) by selective solidification of a build material (30) applied in layers, having an application device with the aid of which build material (30) is applied onto a substrate (28) or an already solidified layer (18) of the object (10) to be manufactured,
the application device including a movably mounted reservoir container (20) for the reception of build material (30), which reservoir container (20) is, for application of a layer (50), transferable from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said reservoir container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and movement of the reservoir container (20) from the application position into the waiting position and/or from the waiting position into the application position, and/or displacement of the separating element (26, 130) for opening and/or closing the reservoir container (20), brings about a gas flow moving along the surface of the layer (50) to be solidified or along the surface of the layer (18) already solidified, and a process space that is under vacuum and in which the method proceeds is provided, in order to reduce the quantity of gas flowing along the surface of the layer (50) to be solidified or the layer (18) already solidified, with the goal of reducing gas movements that can result in turbulence at the layer surface and thus in surface disruptions.

9. An apparatus for manufacturing a three-dimensional object (10) by selective solidification of a build material (30) applied in layers, having an application device with the aid of which build material (30) is applied onto a substrate (28) or an already solidified layer (18) of the object (10) to be manufactured,
the application device including a movably mounted reservoir container (20) for the reception of build material (30), which reservoir container (20) is, for application of a layer (50), transferable from a waiting position into an application position and, before solidification of the layer (50), from the application position back into the waiting position,
and the reservoir container (20) comprising a separating element (26, 130) that is mounted movably, in particular shiftably, with respect to container walls (22, 24) and in the application position extends substantially parallel to the layer (50) to be generated, displacement of which separating element causes a part of the reservoir container (20), said reservoir container (20) being arranged in the application position, firstly to be opened for the application of build material (30),
**characterized in that**
the opened part of the reservoir container (20), said separating container (20) being arranged in the application position, is subsequently closed again for manufacture of the layer (50) to be solidified, by partial removal of the applied, not yet solidified build material (30),
and displacement of the separating element (26, 130) for closure of the part of the reservoir container (20) brings about a pressure increase in the interior of the reservoir container (20), and a pressure equalization device is provided for equalizing said pressure increase.

## Revendications

1. Procédé de fabrication d'un corps tridimensionnel (10) par solidification sélective d'un matériau de construction (30) appliqué en couche, le matériau de construction (30) étant appliqué à l'aide d'un dispositif d'application sur un subjectile (28) ou une couche déjà solidifiée (18) du corps (10) à fabriquer,
dans lequel le dispositif d'application comprend un réservoir (20) monté de manière déplaçable pour recevoir du matériau de construction (30), lequel est transféré en vue de l'application d'une couche (50) d'une position d'attente dans une position d'application et, avant la solidification de la couche (50), est ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le transfert du réservoir (20) de la position d'application dans la position d'attente comprend un soulèvement du réservoir (20) de la couche (50) à solidifier
et/ou
**en ce que** le transfert du réservoir (20) de la position d'attente dans la position d'application comprend un abaissement du réservoir (20).

2. Procédé selon la revendication 1, **caractérisé en ce que**
l'espacement (D3) entre le côté inférieur (300) du réservoir (20) d'une part et la couche (50) à solidifier d'autre part est modifié pendant le transfert du réservoir (20) de la position d'application dans la position d'attente, en particulier avant un déplacement horizontal du réservoir (20) dans la position d'attente, au niveau d'au moins un point, de telle sorte que le côté inférieur (300) du réservoir (20) ne soit pas disposé parallèlement à la couche (50) à solidifier,
et/ou
**en ce que** l'espacement (D3) entre le côté inférieur (300) du réservoir (20) d'une part et la couche (18) déjà solidifiée d'autre part est modifié pendant le transfert du réservoir (20) de la position d'attente dans la position d'application, en particulier à la suite d'un déplacement horizontal du réservoir (20) depuis la position d'attente, de telle sorte que le côté inférieur (300) du réservoir (20) soit disposé de manière essentiellement parallèle à la couche (18) déjà solidifiée.

3. Procédé de fabrication d'un corps tridimensionnel (10) par solidification sélective d'un matériau de construction (30) appliqué en couche, le matériau de construction (30) étant appliqué à l'aide d'un dispositif d'application sur un subjectile (28) ou une couche déjà solidifiée (18) du corps (10) à fabriquer,
dans lequel le dispositif d'application comprend un réservoir (20) monté de manière déplaçable pour recevoir du matériau de construction (30), lequel est transféré en vue de l'application d'une couche (50) d'une position d'attente dans une position d'application et, avant la solidification de la couche (50), est ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le déplacement du réservoir (20) de la position d'application dans la position d'attente et/ou de la position d'attente dans la position d'application et/ou le déplacement de l'élément de séparation (26, 130) pour l'ouverture et/ou la fermeture du réservoir (20) provoquent un flux de gaz se déplaçant le long de la surface de la couche (50) à solidifier ou le long de la couche (18) déjà solidifiée et **en ce que** le procédé se déroule sous vide, afin de réduire la quantité de gaz s'écoulant le long de la surface de la couche (50) à solidifier ou de la couche (18) déjà solidifiée, dans le but de réduire les mouvements de gaz qui peuvent entraîner des tourbillonnements au niveau de la surface de la couche et donc des perturbations superficielles.

4. Procédé de fabrication d'un corps tridimensionnel (10) par solidification sélective d'un matériau de construction (30) appliqué en couche, le matériau de construction (30) étant appliqué à l'aide d'un dispositif d'application sur un subjectile (28) ou une couche déjà solidifiée (18) du corps (10) à fabriquer,
dans lequel le dispositif d'application comprend un réservoir (20) monté de manière déplaçable pour recevoir du matériau de construction (30), lequel est transféré en vue de l'application d'une couche (50) d'une position d'attente dans une position d'application et, avant la solidification de la couche (50), est ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le déplacement de l'élément de séparation (26, 130) en vue de fermer la partie du réservoir (20) provoque une augmentation de pression à l'intérieur du réservoir (20) et **en ce que** l'augmentation de pression est compensée.

5. Procédé selon la revendication 4, **caractérisé en ce qu'**un volume de compensation est fourni par l'environnement du réservoir (20), auquel volume de compensation le réservoir (20) est connecté par le biais d'une ouverture de compensation (302), l'ouverture de compensation (302) étant disposée dans le réservoir (20) de telle sorte que du matériau de construction (30) ne puisse pas s'échapper à travers l'ouverture de compensation (302).

6. Procédé selon la revendication 5, **caractérisé en ce que** l'ouverture de compensation (302) n'est ouverte qu'au besoin.

7. Dispositif de fabrication d'un corps tridimensionnel (10) par solidification sélective d'un matériau de construction (30) appliqué en couche, comprenant un dispositif d'application, à l'aide duquel du matériau de construction (30) est appliqué sur un subjectile (28) ou une couche (18) déjà solidifiée du corps (10) à fabriquer,
dans lequel le dispositif d'application comprend un réservoir (20) monté de manière déplaçable pour recevoir du matériau de construction (30), lequel peut être transféré en vue de l'application d'une couche (50) d'une position d'attente dans une position d'application et, avant la solidification de la couche (50), peut être ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le dispositif d'application est réalisé pour soulever le réservoir (20) de la couche (50) à solidifier pendant le transfert du réservoir (20) de la position d'application dans la position d'attente
et/ou
**en ce que** le dispositif d'application est réalisé pour abaisser le réservoir (20) pendant le transfert du réservoir (20) de la position d'attente dans la position d'application.

8. Dispositif de fabrication d'un corps tridimensionnel (10) par solidification sélective d'un matériau de construction (30) appliqué en couche, comprenant un dispositif d'application, à l'aide duquel du matériau de construction (30) est appliqué sur un subjectile (28) ou une couche (18) déjà solidifiée du corps (10) à fabriquer,
dans lequel le dispositif d'application comprend un réservoir (20) monté de manière déplaçable pour recevoir du matériau de construction (30), lequel peut être transféré en vue de l'application d'une couche (50) d'une position d'attente dans une position d'application et, avant la solidification de la couche (50), peut être ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le déplacement du réservoir (20) de la position d'application dans la position d'attente et/ou de la position d'attente dans la position d'application et/ou le déplacement de l'élément de séparation (26, 130) pour l'ouverture et/ou la fermeture du réservoir (20) provoquent un flux de gaz se déplaçant le long de la surface de la couche (50) à solidifier ou le long de la couche (18) déjà solidifiée et **en ce qu'**il est prévu un espace de processus sous vide, dans lequel se déroule le procédé, afin de réduire la quantité de gaz s'écoulant le long de la surface de la couche (50) à solidifier ou de la couche (18) déjà solidifiée, dans le but de réduire les mouvements de gaz qui peuvent entraîner des tourbillonnements au niveau de la surface de la couche et donc des perturbations superficielles.

9. Dispositif de fabrication d'un corps tridimensionnel (10) par solidification sélective d'un matériau de construction (30) appliqué en couche, comprenant un dispositif d'application, à l'aide duquel du matériau de construction (30) est appliqué sur un subjectile (28) ou une couche déjà solidifiée (18) du corps (10) à fabriquer,
dans lequel le dispositif d'application comprend un réservoir (20) monté de manière déplaçable pour recevoir du matériau de construction (30), lequel peut être transféré en vue de l'application d'une couche (50) d'une position d'attente dans une position d'application et, avant la solidification de la couche (50), peut être ramené de la position d'application dans la position d'attente,
et dans lequel le réservoir (20) présente un élément de séparation (26, 130) déplaçable par rapport à des parois du réservoir (22, 24), en particulier monté de manière coulissante, s'étendant dans la position d'application essentiellement parallèlement à la couche (50) à produire, dont le déplacement permet l'ouverture d'abord d'une partie du réservoir (20) disposé dans la position d'application pour l'application de matériau de construction (30),
**caractérisé en ce que**
la partie ouverte du réservoir (20) disposé dans la position d'application est à nouveau fermée par un déplacement de l'élément de séparation (26, 130) suite à la fabrication de la couche (50) à solidifier par enlèvement partiel du matériau de construction (30) appliqué et pas encore solidifié,
et **en ce que** le déplacement de l'élément de séparation (26, 130) en vue de fermer la partie du réservoir (20) provoque une augmentation de pression à l'intérieur du réservoir (20) et **en ce qu'**un dispositif de compensation de pression est prévu pour compenser cette augmentation de pression.
